**Europäisches Patentamt**

**European Patent Office**

**Office européen des brevets**

(19)

(11) Veröffentlichungsnummer: **0 098 542**
A2

# (12) EUROPÄISCHE PATENTANMELDUNG

(21) Anmeldenummer: 83106416.7

(22) Anmeldetag: 01.07.83

(51) Int. Cl.³: **D 01 F 1/02**, D 01 F 6/10, D 01 F 6/22

(30) Priorität: 09.07.82 DE 3225707
09.07.82 DE 3225708

(43) Veröffentlichungstag der Anmeldung: 18.01.84
Patentblatt 84/3

(84) Benannte Vertragsstaaten: **AT BE CH DE FR GB IT LI NL SE**

(71) Anmelder: **BASF Aktiengesellschaft, Carl-Bosch-Strasse 38, D-6700 Ludwigshafen (DE)**

(72) Erfinder: **Berbner, Heinz, Im Klingenacker 9, D-6942 Moerlenbach (DE)**
Erfinder: **Bonitz, Eckhard, Dr., Carostrasse 23, D-6710 Frankenthal (DE)**
Erfinder: **Seid, Bernhard, Albrecht-Duerer-Ring 28, D-6710 Frankenthal (DE)**
Erfinder: **Voelker, Heinz, Dr., Woogstrasse 37, D-6703 Limburgerhof (DE)**
Erfinder: **Zettler, Hans Dieter, Bueckelhaube 35, D-6718 Gruenstadt (DE)**

(54) **Fibrillen aus Polymerisaten des Vinylchlorids, Vinylidenchlorids oder Styrols.**

(57) Die Erfindung betrifft Fibrillen aus Polymerisaten des Vinylchlorids, Vinylidenchlorids oder Styrols, die mit 0,1 bis 900 Gew.% Kieselsäure, einem Metalloxid oder -silikat, z.B. Zement, modifiziert sind. Sie weisen einen hohen Mahlgrad, ein gutes Wasserrückhaltevermögen und eine hohe spezifische Oberfläche auf. Sie werden hergestellt durch Ausfällen aus einer Lösung des Polymerisats, welche ein anorganisches Modifizierungsmittel dispergiert enthält. Die Fibrillen können als Asbestersatz mit üblichen hydraulischen Bindemitteln und Wasser gemischt und zu Bauelementen verarbeitet werden.

BASF Aktiengesellschaft

Fibrillen aus Polymerisaten des Vinylchlorids, Vinylidenchlorids oder Styrols

Die Erfindung betrifft Fibrillen aus Polymerisaten des Vinylchlorids, Vinylidenchlorids oder Styrols, die mit Kieselsäure, Zement, Silikaten oder Oxiden modifiziert sind, ein
Verfahren zur Herstellung dieser Fibrillen, eine härtbare
Formmasse, welche diese Fibrillen enthält, sowie ein Verfahren zur Herstellung von Bauelementen aus hydraulischen
Bindemitteln und den Fibrillen.

Aus der DE-A 25 16 561 ist ein Verfahren zur Herstellung
von Fibrillen bekannt, bei dem man Lösungen von Polymerisaten des Vinylchlorids, Vinylidenchlorids oder Styrols in
Tetrahydrofuran, Methylethylketon oder 1,4-Dioxan bei
Raumtemperatur unter Einwirkung von Scherkräften in ein
flüssiges Fällmedium, vorzugsweise Wasser einbringt. Aus
derselben Patentschrift sind auch Vorrichtungen zur Durchführung dieses Verfahrens bekannt. Man erhält damit Fibrillen, die eine Länge von 0,5 bis 30 mm, eine Dicke von
0,5 bis 10 µm, eine spezifische Oberfläche von 10 bis
70 $m^2$/g und einen Mahlgrad nach Schopper-Riegler von 15
bis 50°SR aufweisen, und die sich zu papierähnlichen
Flächengebilden verarbeiten lassen.

Bei weiterführenden Versuchen zur Verbesserung der Eigenschaften derartiger Fibrillen, und vor allem, um noch
weitere Anwendungsmöglichkeiten zu erschließen, wurde
überraschenderweise gefunden, daß man modifizierte Fibrillen mit verbesserten Eigenschaften und wesentlich erweiterten Verwendungsmöglichkeiten erhält, wenn man
während ihrer Herstellung bestimmte anorganische Stoffe mit
einarbeitet.

Dd/Ws

Die erfindungsgemäßen Fibrillen bestehen aus Polymerisaten des Vinylchlorids, Vinylidenchlorids oder Styrols. Sie enthalten 0,1 bis 900 Gew.% - bezogen auf festes Polymerisat - an Kieselsäure, einem Silikat eines ein- bis dreiwertigen Metalls oder einem Oxid eines zwei- bis vierwertigen Metalls. Sie sind durch folgende Eigenschaften charakterisiert:

a) einem Mahlgrad nach Schopper-Riegler von 20 bis 90°SR,

b) einem Wasserrückhaltevermögen, gemessen mit der Schopper-Riegler-Apparatur von 10 bis 120 g $H_2O$ pro g Polymerisatanteil der Fibrillen, und

c) einer spezifischen Oberfläche nach BET von größer als 20 $m^2 \cdot g^{-1}$.

Unter Fibrillen im Sinne der Erfindung werden faserige synthetische Polymerisatpartikel verstanden, welche morphologisch nach Größe und Gestalt den Zellulosefasern ähnlich sind. Im englichen Sprachgebrauch ist dafür der Ausdruck "fibrids" üblich.

Gegenüber den gemäß DE-C 25 16 561 erhaltenen unmodifizierten Fibrillen, weisen die erfindungsgemäßen Fibrillen eine feinere Struktur auf, insbesondere einen höheren Mahlgrad und eine größere spezifische Oberfläche. Die modifizierten Fibrillen besitzen Eigenschaften und Anwendungsmöglichkeiten der in ihnen enthaltenen anorganischen Stoffe, insbesondere können sie, wie die letzteren selbst, allen chemischen Reaktionen unterworfen werden, zu denen diese anorganischen Zusätze fähig sind.

Sie können mit hydraulischen Bindemitteln, z.B. Zement, und Wasser vermischt werden. Die dabei erhaltene Formmasse besitzt gute Blattbildungseigenschaften und kann nach

üblichen Verfahren der Asbestzement-Verarbeitung, z.B. auf einer Hatschek-Maschine verformt und zu Bauelementen verarbeitet werden. Dabei stellen die Fibrillen einen Ersatz für Asbestfasern dar, wobei mit wesentlich geringeren Mengen an Fibrillen anstelle von Asbest gearbeitet werden kann.

In der GB-A-1 316 661 sind faserartige Verstärkungsmaterialien für Zement beschrieben, die durch Modifizieren von Kunststoff-Fasern mit einem zementartigen Material hergestellt werden. Im Falle der Verwendung von Polyvinylchlorid als Kunststoff (Beispiel 6) soll pulverförmiges Polyvinylchlorid mit Quarzmehl vermischt, die Mischung aufgeschmolzen und zu Fäden versponnen werden, die dann geschnitten werden. Die Nacharbeitung dieses Beispiels wurde abgebrochen, als sich die Spinndüsen zusetzten. Entsprechend hergestellte Fäden auf Basis von Polypropylen haben eine glatte Struktur, die sich eindeutig von der Fibrillen-Struktur unterscheidet, insbesondere haben sie eine sehr niedrige spezifische Oberfläche. Solche Fasern können nicht auf Hatschek-Maschinen mit hydraulischen Bindemitteln verarbeitet werden, sie sind daher als Ersatz für Asbestfasern bei der Herstellung von Bauelementen ungeeignet.

In der DE-A-2 063 933 sind füllstoffhaltige synthetische Fasern aus thermoplastischen Polymeren beschrieben, die 6 bis 75 % eines Füllstoffs in feinteiliger Form, beispielsweise Talkum enthalten. Sie sollen u.a. zur Herstellung von Betonbauteilen verwendbar sein. Die Fasern werden hergestellt durch Extrusion einer Folie aus einem Gemisch von Polymer und Füllstoff, Verstrecken der Folie und Fibrillieren des verstreckten Films. Mit dem bevorzugten Polypropylen erhält man Fibrillen, die spezifische Oberflächen von weit unter $1 \ m^2 \cdot g^{-1}$ aufweisen, mit dem ebenfalls erwähnten Polyvinylchlorid ist eine derartige Fibrillierung nicht möglich.

Die erfindungsgemäßen Fibrillen werden vorzugsweise hergestellt durch Ausfällen aus einer Polymerisat und Modifizierungsmittel enthaltenden Lösung unter Energiezufuhr. Das Ausfällen kann z.B. geschehen durch Eintragen der Lösung in ein Fällmedium oder durch adiabatisches Entspannen einer heißen, unter Druck stehenden Lösung.

Bei dem bevorzugten Herstellungsverfahren wird eine 0,5 bis 40 Gew.%ige Lösung von Polymerisaten des Vinylchlorids, Vinylidenchlorids oder Styrols, in einem organischen Lösungsmittel, welche 0,1 bis 900 Gew.% - bezogen auf festes Polymerisat - eines anorganischen Modifizierungsmittels enthält, unter Einwirkung von Scherkräften in eine das Polymerisat nicht lösende Flüssigkeit (Fällmedium) eingetragen, wobei das Polymerisat ausfällt.

Unter Eintragen der Lösung eines Polymerisats in das Fällmedium versteht man das Vermischen der Lösung mit einem Überschuß des Fällmediums, meist bei Raumtemperatur. Dies kann jedoch auch bei tieferer oder höherer Temperatur erfolgen. Die gelösten Polymerisate sind im Fällmedium unlöslich, die Lösungsmittel jedoch damit mischbar. Als Fällmedium können z.B. niedere Alkohole oder Glykole eingesetzt werden, in welchen die Polymeren unlöslich sind, und die mit dem organischen Lösungsmittel für die Polymeren in jedem Verhältnis mischbar sind. Bevorzugt verwendet man aber als Fällmedium Wasser.

Als Lösungsmittel sind bevorzugt Tetrahydrofuran, Methylethylketon und 1,4-Dioxan geeignet, da sie ein hohes Lösevermögen für die Polymerisate aufweisen, mit dem Fällmedium unbegrenzt mischbar sind und einen niedrigen Siedepunkt besitzen. Sie bilden z.B. mit Wasser ein Azeotrop, das einen hohen Anteil an Lösungsmittel besitzt, was für die wirtschaftliche Wiedergewinnung des Lösungsmittels von Be-

"deutung ist.

Die Konzentration der Polymerisate in der Lösung beträgt zweckmäßigerweise 0,5 bis 40, vorzugsweise 10 bis 25 Gew.%. Geeignete Polymerisate sind Polyvinylchlorid, Polyvinylidenchlorid und Polystyrol, sowie Copolymerisate des Styrols mit untergeordneten Mengen, z.B. $C_1$- bis $C_8$-Ethylestern der (Meth)acrylsäure, Acrylnitril, Maleinsäureanhydrid oder Maleinsäureestern, wobei die Molekulargewichte in dem für die genannten Polymerisate üblichen Bereiche liegen.

Die Polymerisatlösung enthält die anorganischen Zusätze in Mengen von - bezogen auf festes Polymerisat - 0,1 bis 900, vorzugsweise 1 bis 100 und insbesondere 5 bis 50 Gew.%. Bevorzugte Modifizierungsmittel sind Calciumoxid, Calciumhydroxid, Aluminiumoxid, Calciumsilikat, Kieselsäure, z.B. als "Aerosil", Zement z.B. als "Eisenportlandzement", Natriumsilikat, z.B. als "Wasserglas", Silane, z.B. Methyltrichlorsilan, Phenyltrichlorsilan oder Ethylpolysiloxan, Siliciumtetrachlorid und das Reaktionsprodukt aus Zement oder Calciumoxid und Siliciumtetrachlorid, das sich beispielsweise in der Polymerisatlösung in situ bildet. Die Zusätze können einzeln oder im Gemisch eingesetzt werden. Häufig, vor allem wenn $SiCl_4$ allein zur Anwendung gelangt, ist es zweckmäßig, das zur Fällung zu verwendende Fällmedium auf einem alkalischen pH-Wert von 10 bis 14 einzustellen, was z.B. mittels einer Zementlauge erfolgen kann. Grundsätzlich kann auch im sauren Milieu, z.B. bei pH = 2 bis 5, gearbeitet werden. Anschließend wird dann mit Wasser neutral gewaschen.

Bevorzugt gibt man, je nach dem geplanten Verwendungszweck, Portlandzement, Kieselsäure, pyrogene Kieselsäure Calciumoxid, oder Siliciumtetrachlorid - wobei in Zementlauge gefällt wird - zu, oder man stellt in dem Lösungs-

mittel, das zur Herstellung der Polymerisatlösung dient, das Reaktionsprodukt aus Portlandzement und Siliciumtetrachlorid her. Analog kann auch mit einer Mischung von Calciumoxid oder Magnesiumoxid und Siliciumtetrachlorid verfahren werden.

Bei der Einarbeitung der anorganischen Bestandteile in die Lösungen ist dafür Sorge zu tragen, daß diese anorganischen Bestandteile in möglichst feinverteilter Form vorliegen, was z.B. durch intensives Rühren der Lösungen erreicht werden kann.

Die so vorbereiteten Lösungen werden anschließend gemäß der Lehre der DE-A 25 16 561, auf die hier ausdrücklich Bezug genommen wird, in einem Fibrillenbildungsraum in das Fällmedium eingetragen.

Unter Fibrillenbildungsraum wird die Zone eines Scherfeldgenerators verstanden, in der die Polymerisatlösung und das flüssige Fällmedium, z.B. Wasser, zusammentreffen, und in der eine mittlere Energiedichte von mindestens 5 und im allgemeinen bis zu 80 Watt $\cdot$ sec/cm$^3$ herrscht.

Das Volumen des Fibrillenbildungsraums ist abhängig von der Strömungsgeschwindigkeit des mit der Polymerisatlösung vereinigten Fällmediums. Da die Bildung der Fibrillen innerhalb von $1 \cdot 10^{-2}$ bis $1 \cdot 10^{-4}$ Sekunden erfolgt, beträgt die Länge des Fibrillenbildungsraums bei Strömungsgeschwindigkeiten von 5 bis 50 m/sec 0,1 bis 50 cm, vorzugsweise 0,1 bis 5 cm.

Als Scherfeldgeneratoren werden Vorrichtungen verwendet, welche mechanisch durch rotierende Werkzeuge ein Scherfeld erzeugen. Hierfür sind handelsübliche Maschinen geeignet, die zum Dispergieren und Homogenisieren von z.B. Polymeri-

0098542

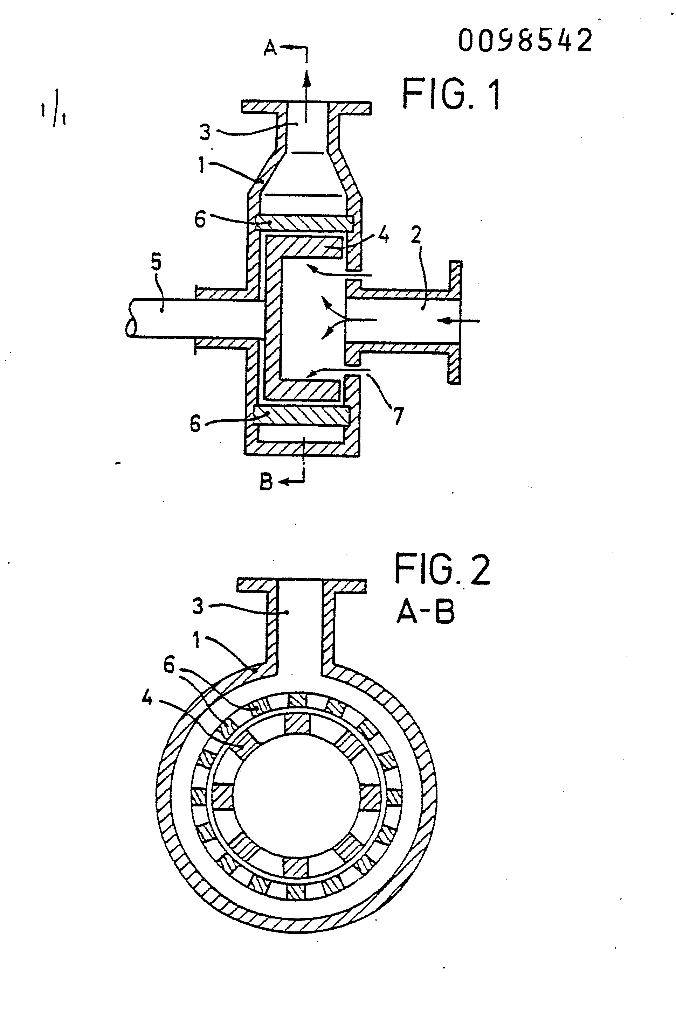

sat-Dispersionen verwendet werden. Bei diskontinuierlicher Arbeitsweise können hochtourige Dispergiermaschinen oder Scherfeldgeneratoren vom Typ Ultra-Turrax verwendet werden. Eine kontinuierliche Arbeitsweise gestattet folgende Vorrichtung (Abbildung 1).

In einem Gehäuse 1 mit Eintragsstutzen 2 und Austragsstutzen 3 befindet sich ein Rotor 4, der über eine Welle 5 angetrieben wird. Dieser Rotor 4 setzt das im Gehäuse befindliche flüssige Fällmedium, das laufend durch den Eintragsstutzen 2 zugeführt wird, in rotierende Bewegung. Dabei wird die kinetische Energie des Rotors auf das flüssige Fällmedium übertragen. Das beschleunigte flüssige Fällmedium wird in einer ringförmigen Bremszone 6 abgebremst. Dabei wird ein Teil der kinetischen Energie in Wärme umgewandelt. Die Bremszone wird von einem ringförmigen Stator gebildet, der scharfkantige Öffnungen und Prallflächen besitzt.

Zur Herstellung von Fibrillen wird die Polymerisatlösung durch ein Rohr 7 mit einem Innendurchmesser von 4 mm mittels einer Dosierpumpe in das flüssige Fällmedium eingetragen, wobei sich die Austrittsöffnung des Rohres an dem Ort befindet, an dem das flüssige Fällmedium seine höchste Beschleunigung erfährt. Am Austragsstutzen 3 wird eine Fibrillen-Suspension kontinuierlich ausgetragen. Es können mittlere Energiedichten von 20 bis 80 Watt $\cdot$ sec/cm$^3$ herrschen.

Wird die Lösung des Polymerisats durch eine oder mehrere Düsen ausgepreßt, wobei gegebenenfalls gleichzeitig das flüssige Fällmedium mit einer Strömungsgeschwindigkeit von mindestens 5 m/sec mit der Lösung des Polymerisats in einem Scherfeld intensiv durchmischt wird, so werden ebenso Fibrillen erhalten. Die mittlere Energiedichte im Fibrillenbildungsraum beträgt 5 bis 30 Watt $\cdot$ sec/cm$^3$.

"Nach einer speziellen Ausführungsform erfolgt die intensive Durchmischung der strömenden Medien in einem Scherfeldgenerator nach der DE-A 25 16 561. Eine andere Ausführungsform verfährt mit einer Vorrichtung, die in der DE-A 26 006 24 auf die hier ebenfalls Bezug genommen wird beschrieben ist.

Nach allen Verfahrensvarianten werden unmittelbar stabile, diskrete Fibrillen erhalten. Sie können durch Filtrieren oder Zentrifugieren von dem flüssigen Fällmedium und der Hauptmenge des organischen Lösungsmittels abgetrennt werden. Die Entfernung des restlichen Lösungsmittels erfolgt durch Waschen mit Wasser auf dem Filter oder in der Zentrifuge. Die eingesetzten organischen Lösungsmittel können durch Destillation wiedergewonnen und in den Prozeß zurückgeführt werden.

Die erhaltenen Fibrillen besitzen einen Wassergehalt von vorzugsweise 50 bis 96 Gewichtsprozent und können in dieser Form für Naßanwendung eingesetzt werden.

Für spezielle Anwendungen können die Fibrillen bei erhöhten Temperaturen getrocknet werden. Hierbei hat sich eine Trocknungsmethode, die mit Heiz- und Fördergasen, die eine hohe Strömungsgeschwindigkeit besitzen, als besonders geeignet erwiesen. Verfilzte Fibrillen werden hierbei wieder entfilzt.

Die erfindungsgemäßen Fibrillen weisen eine verästelte Struktur auf. Ihre Länge beträgt vorzugsweise 0,1 bis 200, insbesondere 0,5 bis 50 mm, ihre Dicke weniger als 5 μm, insbesondere 0,01 bis 0,5 μm, wobei die Dicke der feinen Einzelfasern, mikroskopische bei einer Vergrößerung von 1:20.000 bestimmt, gemeint ist. Sie zeichnen sich vor allem durch ihre hohe spezifische Oberfläche nach BET (gemessen nach Gefriertrocknung bei -190°C) von größer als 20,

0098542

vorzugsweise 40 bis 200 $m^2 \cdot g^{-1}$ aus, sowie durch ihre guten Blattbildungseigenschaften, ausgedrückt durch den Mahlgrad nach Schopper-Riegler von 20 bis $90^o$ SR, vorzugsweise 40 bis $70^o$ SR und ein Wasserrückhaltevermögen, gemessen mit der Schopper-Riegler-Apparatur, von 10 bis 120, vorzugsweise 40 bis 110 g $H_2O$ pro g Polymerisatanteil der Fibrille.

Die erfindungsgemäßen Fibrillen sind auch ohne Schlepphilfen, wie Cellulose, zur Blattbildung und Vliesbildung beim Abscheiden aus wäßriger Suspension auf einem Sieb, oder zusammen mit hydraulischen Bindemitteln und Wasser auf üblichen Maschinen zur Asbestzementherstellung geeignet. Sie können ihrerseits als Schlepphilfe für andersartige Fasern, die selbst keine blattbildenden Eigenschaften haben, z.B. Glasfasern oder Polyacrylnitril-Fasern bei der Elastifizierung von Zement-Bauelementen dienen.

Wäßrige Suspensionen aus den erfindungsgemäßen Fibrillen werden beispielsweise hergestellt, indem man die Fibrillen unter Rühren im Wasser einträgt, in dem gegebenenfalls ein Dispergiermittel in einer Menge von 0,1 bis 1,0 Gewichtsprozent, bezogen auf das Trockengewicht der Fibrillen gelöst ist. Der erhaltene Faserbrei wird dann noch 5 bis 15 Minuten lang mit einem hochtourigen Propellerrührer umgearbeitet. Die Stoffdichte beträgt hierbei im allgemeinen 0,5 bis 10 und vorzugsweise 1 bis 5 %.

Als Dispergiermittel können zum Beispiel oberflächenaktive Substanzen, die aus hydrophilen und hydrophoben Segmenten aufgebaut sind, Polyvinylalkohole oder Stärke verwendet werden.

Die wäßrigen Suspensionen der Fibrillen können nach entsprechender weiterer Verdünnung mit Wasser auf einer

Papier- oder Naßvliesmaschine zu papierähnlichen Flächengebilden verarbeitet werden. Synthetische Fibrillen nach dem Stand der Technik, z.B. aus Polyethylen können demgegenüber im allgemeinen nur in Mischung mit Zellulose und unter Anwendung erheblicher Mengen Dispergierhilfsmittel zu papierähnlichen Flächengebilden verarbeitet werden.

Das Ausmaß der Fibrillierung der erhaltenen Fibrillen wurde durch Bestimmung des Mahlgrades nach der Schopper-Riegler-Methode (Korn-Burgstaller, Handbuch der Werkstoffprüfung, 2. Auflage 1953, 4. Band, Papier und Zellstoffprüfung, Seite 388 ff, Springer-Verlag) festgestellt. Für die Durchführung dieser Bestimmung müssen die Fibrillen in eine wäßrige Suspension mit konstanter Stoffdichte (2 g Fibrillen/l und $20^{\circ}C$) gebracht werden. Es wird diejenige Menge Wasser ermittelt, die unter bestimmten Bedingungen von den suspendierten Fibrillen zurückgehalten wird. Die aufgenommene Menge Wasser ist umso größer, je höher die Fibrillierung der Fibrillen ist. Die Schopper-Riegler-Werte eines ungemahlenen Sulfitzellstoffs liegen bei 12 bis $15^{\circ}SR$.

Die Bestimmung der spezifischen Oberfläche erfolgte nach der BET-Methode durch Stickstoffadsorption (S. Brunauer, T. H. Emmett, E. Teller, Journal American Chemical Society, Band 60, S. 309, [1938]) an Fibrillen, die bei $-190^{\circ}C$ gefriergetrocknet wurden.

Die mittlere Energiedichte E im Fibrillenbildungsraum des Scherfelds wurde wie folgt errechnet:

$$E = \frac{m \cdot v^2}{2} \quad [W \cdot sec]$$

m = Masse (kg) des Fällmediums und der Polymerisatlösung, die innerhalb einer Sekunde durch
den Fibrillenbildungsraum strömt.

V = mittlere Strömungsgeschwindigkeit (m/s der
vereinigten Flüssigkeiten.

Die erfindungsgemäßen Fibrillen enthalten die feinverteilten anorganischen Modifizierungsmittel wie in einem Käfig "eingesponnen". Sie sind deshalb Reaktionen zugänglich, wie sie auch mit den anorganischen Modifizierungsmitteln möglich sind.

So können sie z.B. wie Zement selbst mit $SiO_2$ reagieren und zu Formkörpern verarbeitet werden. $SiO_2$-haltige Fibrillen können mit Portlandzement und Wasser anstelle von Asbest umgesetzt und ebenfalls zu Formkörpern verarbeitet werden.

Bei der Lagerung im Fällmedium, z.B. Zementlauge oder Kalkwasser "mineralisieren" sich die Fibrillen, wobei in und um die Fibrillen Kristalle wachsen. Besonders in Mischungen mit Portlandzement und Wasser entstehen sehr feine, nadelartige Kristalle. Die in den Fibrillen eingelagerten Kristalle bewirken, daß Teile von Portlandzement in Faserform auskristallisieren. Darauf ist wohl die besondere Wirkung der Fibrillen als Verstärkungsmittel in Zement-Bauelementen zurückzuführen.

Die bevorzugte Verwendung der erfindungsgemäßen Fibrillen ist die Herstellung von Bauelementen. Man geht dabei aus

0098542

von einer härtbaren Formmasse auf Basis üblicher hydraulischer Bindemittel, die 0,1 bis 50 Gew.% - bezogen auf wasserfreies Bindemittel - an Fibrillen enthalten. Dabei sind die üblichen hydraulischen Bindemittel geeignet, beispielsweise die genormten Zemente nach DIN 1164, DIN 1167 und DIN 4210 sowie die nicht genormten Zemente, wie Tonerdeschmelzzement, Ölschieferzement und Traßhochofenzement, Gips nach DIN 1168, Kalk nach DIN 1060 sowie Tonerde.

Die härtbare Formmasse enthält 0,1 bis 50, vorzugsweise 0,5 bis 30 Gew.% und insbesondere 1 bis 5 Gew.% Fibrillen, bezogen auf wasserfreies Bindemittel, während herkömmliche härtbare Formmassen zur Herstellung von Asbestzement 8 bis 25 Gew.% Asbestfasern enthalten. Sie kann darüberhinaus übliche Füllstoffe wie Kieselsäure, Schiefermehl, Holz, Kreide, Vermiculit, Perlit, Kieselgur, Sand oder Glimmer in Mengen von bis zu 100 Gew.%, bezogen auf Bindemittel, enthalten.

Bevorzugter Zusatzstoff ist feinteilige Kieselsäure (silica) aus Rückständen der Cellulosegewinnung mit einer spezifischen Oberfläche nach BET von größer als $5 \ m^2 \cdot g^{-1}$ in Mengen von 0,1 bis 100, vorzugsweise von 1 bis 20 Gew.%, bezogen wasserfreies Bindemittel.

Weiterhin ist es möglich, Fasern aus anorganischem oder organischem Material zuzusetzen oder Gewebe bzw. Vliese einzuarbeiten. Schließlich können auch übliche Abbindeverzögerer, wie z.B. Phosphate oder organische Stoffe wie Oxycarbonsäuren oder Natriumgluconat und Abbindebeschleuniger, wie z.B. alkalische reagierende Salze, z.B. Wasserglas, oder Calciumsalze zugesetzt werden.

Die Herstellung der Bauelemente kann nach den üblichen Verfahren für die Asbestzement-Verarbeitung erfolgen, z.B. nach dem Hatschek-Verfahren, wie es in "Asbestzement" von Harald Klos, Springer Verlag 1967, Wien/New York beschrieben ist. Auch die anderen, in der Asbestzement-Technik üblichen Verfahren, wie z.B. das Gußverfahren zur Herstellung von Formstücken und Rohren können angewandt werden. Man stellt zunächst eine Mischung her aus dem hydraulischen Bindemittel, 0,1 bis 50, vorzugsweise 1 bis 30 Gew% Fibrillen, mindestens 30, vorzugsweise 50 bis 500 Gew.% Wasser, jeweils bezogen auf das Bindemittel, sowie gegebenenfalls Füllstoffen, Fasern und anderen Zusatzstoffen. Von dieser Schlempe wird dann so viel Wasser mechanisch abgetrennt, daß sich die Masse verfestigt. Die entstandene Formmasse, die im allgemeinen noch einen Wassergehalt von 10 bis 1200, bevorzugt 20 bis 100 Gew.%, bezogen auf wasserfreies Bindemittel, aufweist, kann dann zu dem gewünschten Bauelement verformt und schließlich ausgehärtet werden. Die Abtrennung des Wassers kann z.B. durch Absaugen oder durch Abpressen erfolgen, die Verformung der Formmasse mit üblichen Vorrichtungen, wie z. B. in "Asbestzement" beschrieben.

Mit dem erfindungsgemäßen Verfahren lassen sich alle üblichen Bauelemente, wie Platten, Tafeln, Profile, Rohre, Wellplatten, Verkleidungselemente oder Behälter herstellen. Die Härtung der Bauelemente kann ebenso wie bei Asbestzement vorgenommen werden, z.B. durch Lufthärtung, Wasserbadhärtung, Autoklavhärtung oder in einer Abbindekammer.

Die in den Beispielen genannten Teile und Prozente beziehen sich auf das Gewicht.

Beispiel 1

100 Teile Polyvinylchlorid (K-Wert nach DIN 53726 von 61,

Dichte 1,38 g/cm$^3$) werden bei 25$^o$C in 1500 Teilen Tetrahydrofuran (0,2 % Wasser) gelöst. In weitere 400 Teile Tetrahydrofuran gibt man 300 Teile Eisenportlandzement und vereint beide Mischungen. Unter Rühren leitet man diese einem Scherfeldgenerator zu und fällt die Fibrillen in 300 000 Teilen Wasser aus. Diese Verfahrensweise ist in DE-A 25 16 561 beschrieben. Die ausgefällten Fibrillen besitzen zementgraue Farbe und werden mit weiterem Wasser vom Tetrahydrofuran freigewaschen. Der in die Polymerisatlösung gegebene Zementanteil wird prakttisch vollständig in das Fibrillenprodukt eingesponnen und ist in diesem allen chemischen Reaktionen zugänglich. Die Aschebestimmung ergibt 73 Gew.%, und die Fibrillen bestehen zu 27 % aus PVC. Der Zement liegt dabei in hydratisierter Form vor. Das Fällbadwasser ist klar und enthält nur noch etwa 0,1 bis 0,5 % gelöste Zementbestandteile. Es besitzt einen pH-Wert von 12.0.

Zur Bestimmung der spezifischen Oberfläche nach der BET-Methode (S. Brunauer, T.H. Emmet, E. Teller Journal American Chemical Society, Band 60, S. 309; 1938) werden die Fibrillen mit Methanol und Pentan gewaschen und im Vakuum bei -190$^o$C gefriergetrocknet.

Die spezifische Oberfläche der PVC-Fibrillen betrug 60 m$^2$/g und die des eingeschlossenen Zementes 2,0 m$^2$/g Der Mahlgrad, nach Schopper-Riegler-Methode gemessen, betrug 40$^o$ SR, das Wasserrückhaltevermögen 54g H$_2$O pro g Fibrille.

Beispiel 2          (Vergleich mit Beispiel 1)

Man verfährt wie in Beispiel 1 und löst 100 Teile Polyvinylchlorid in 1900 Teilen Tetrahydrofuran und fällt die Fibrillen ohne die Anwesenheit von Zement aus.

Man erhält ein rein weißes Fibrillenprodukt, das nicht so fein wie in Beispiel 1 strukturiert ist, und welches bei der Bestimmung der spezifischen Oberfläche einen Wert von 12,0 $m^2$/g zeigt und einen Mahlgrad von $18^o$ SR aufweist.

Beispiel 3

Man verfährt wie in Beispiel 1 und gibt in die Polymerisatlösung auf 100 Teile Polyvinylchlorid 10 Teile pyrogene Kieselsäure (sogen. "Aerosil") in 1900 Teilen Tetrahydrofuran.

Man erhält rein weiße Fibrillen mit einer BET-Oberfläche von 40 $m^2$/g, einem Mahlgrad von $38^o$SR und einem Wasserrückhaltevermögen von 45g $H_2O$ pro g Fibrille. Sie lassen sich vorteilhaft anstelle von Asbest mit Portlandzement und Wasser auf einer Hatschekmaschine der Asbest-Zement-Herstellung zu Formkörpern verarbeiten:

970 Teile Portlandzement 35 und 100 Teile feinteilige Kieselsäure, BET-Oberfläche : 20$m^2$/g, werden mit 6100 Teilen Wasser 1 Stunde gerührt. Dazu gibt man 30 Teile Fibrillen, berechnet als Trockenstoff, hergestellt gemäß Beispiel 3, und verdünnt die Mischung mit 23000 Teilen Wasser. Man hält die Feststoffpartikel in dieser Mischung durch Rühren in der Schwebe und leitet sie kontinuierlich einer Hatschekmaschine zu. Aus etwa 50 Lagen der dabei hergestellten Zement-Wasser-Fibrillen-Vliese werden Platten hergestellt, die in ausgeformtem Zustand 4 bis 5 mm Dicke aufweisen. Der Wassergehalt der frisch hergestellten Platten beträgt 25 bis 30 Gew.%, bezogen auf die Gesamtmasse. Die erhaltenen Platten werden in üblicher Weise feucht gehalten und ausgehärtet.

Beispiel 4

Man verfährt wie in Beispiel 3 und stellt eine Lösung von 200 Teilen Polyvinylchlorid in 2000 Teilen Tetrahydrofuran her. In diese gibt man 50 Teile Calciumoxid. Als Fällbad dient Kalkwasser mit einem pH-Wert von 12,5, das etwa 1,2 g CaO/1000 ml enthält.
Die erhaltenen Fibrillen eignen sich gut zur Herstellung von seidenpapierartigen Vliesen.

Beispiel 5

Man verfährt wie in Beispiel 3 und löst anstelle von Polyvinylchlorid 100 Teile Polystyrol, Dichte 1,05 g/cm$^3$, Schmelzindex von 1,2 g/10 min, in 1500 Teilen Tetrahydrofuran (200$^\circ$C/5 kp) und gibt 20 Teile pyrogene Kieselsäure hinzu. Man erhält ein Produkt, welches ähnliche Eigenschaften bei der Verarbeitung mit Zement und Wasser zeigt, wie das in Beispiel 3 beschriebene Produkt. Seine BET-Oberfläche beträgt 38 m$^2$/g, der Mahlgrad 33$^\circ$SR und das Wasserrückhaltevermögen 40 g H$_2$O pro g Fibrille.

Beispiel 6

100 Teile Polystyrol werden in 2000 Teilen Tetrahydrofuran, das 20 Teile Siliciumtetrachlorid enthält, gelöst. Das Ausfällen der Fibrillen erfolgt mit Hilfe einer Vorrichtung zur Herstellung von Fibrillen in 30 000 Teilen Zementlauge mit einem pH-Wert von 12,0. Man erhält Polystyrolfibrillen, die 2,9 Gew.% Siliciumdioxid enthalten.

Beispiel 7

In einem Rührbehälter stellt man eine Mischung aus 1780 Teilen Tetrahydrofuran, 300 Teilen PVC (K-Wert 61 nach DIN 53 726) und 100 Teilen Eisenportlandzement her. In diese Mischung gibt man 280 Teile Siliciumtetrachlorid. Unter Wärmeentwicklung setzt eine Reaktion ein. Die Temperatur steigt bis zum Sieden von Tetrahydrofuran an. Die überschüssige Wärme führt man durch Kühlen ab. Im Verlauf der Reaktion wird die anfangs zementgraue Färbung des Feststoffes in der Mischung weiß. Gleichzeitig steigt die Viskosität der Mischung an. Das Reaktionsprodukt leitet man mit Hilfe einer Dosierpumpe einem Scherfeldgenerator zu, wie dieser in DE-A 25 16 562 beschrieben ist, und fällt die Fibrillen in 300 000 Teilen Wasser aus. Diese werden mit einem Sieb abgetrennt, und durch Waschen mit Wasser frei von Lösungsmittel erhalten. Das Reaktionsprodukt aus Eisenportlandzement und Siliciumtetrachlorid mit Wasser ist in den Fibrillen eingeschlossen dabei gleichzeitig chemischen Reaktionen zugänglich. Das Fällbadwasser ist klar. Es enthält nur noch etwa 0,1 bis 0,5 Gew.% gelöste Zementbestandteile (pH-Wert 6,0). Zur Bestimmung der spezifischen Oberfläche nach der BET-Methode durch Adsorption von Stickstoff werden die Fibrillen mit Methanol und Pentan gewaschen und im Vakuum getrocknet. Spez. Oberfläche: 90 $m^2$/g, Mahlgrad = 79°SR, Wasserrückhaltevermögen: 102 g $H_2O$ pro g Fibrille.

Die Fibrillen wurden, wie in Beispiel 3 beschrieben, auf der Hatschek-Maschine zu Platten verarbeitet.

Beispiel 8        (Zum Vergleich)

Man verfährt wie in Beispiel 7 und löst 300 Teile PVC in 1780 Teilen Tetrahydrofuran, ohne Zusatz von Zement und Siliciumtetrachlorid. Beim Ausfällen der Fibrillen erhält man ein Produkt von verhältnismäßig grober Struktur. Spezifische Oberfläche: 12 $m^2$/g

0098542

Es kommt leicht zu Störungen bei der Ausfällung, da die frisch ausgefällten Fibrillen zu größeren Strängen zusammenkleben.

Patentansprüche

1.    Fibrillen aus Polymerisaten des Vinylchlorids, Vinylidenchlorids oder Styrols, enthaltend 0,1 bis 900 Gew.% - bezogen auf festes Polymerisat - an Kieselsäure, einem Silikat eines ein- bis dreiwertigen Metalls oder einem Oxid eines zwei- bis vierwertigen Metalls, gekennzeichnet durch folgende Eigenschaften:

a)    einem Mahlgrad nach Schopper-Riegler von 20 bis 90°SR,

b)    einem Wasserrückhaltevermögen gemessen in der Schopper-Riegler-Apparatur von 10 bis 120 g $H_2O$ pro g Polymerisatanteil der Fibrillen, und

c)    einer spezifischen Oberfläche nach BET von größer als 20 $m^2 \cdot g^{-1}$.

2.    Verfahren zur Herstellung der Fibrillen nach Anspruch 1, durch Eintragen von 0,5- bis 40 Gew.%iger Lösung von Polymerisaten des Vinylchlorids, Vinylidenchlorids oder Styrols in einem organischen Lösungsmittel unter Einwirkung von Scherkräften in eine das Polymerisat nicht lösende Flüssigkeit, wobei das Polymerisat ausfällt, dadurch gekennzeichnet, daß die Polymerisatlösung - bezogen auf festes Polymerisat - 0,1# bis 900 Gew.% Kieselsäure, ein Silikat eines ein- bis dreiwertigen Metalls, ein Oxid eines zwei- bis vierwertigen Metalls, Siliciumtetrachlorid, eines Silans oder einer Mischung bzw. eines Reaktionsproduktes aus

a)    einem der genannten Oxide oder Silikate mit

b) Siliciumtetrachlorid oder einem Organochlorsilan

enthält.

3. Härtbare Formmasse auf Basis üblicher hydraulischer
Bindemittel, enthaltend 0,1 bis 50 Gew.%, bezogen auf
wasserfreies Bindemittel, Fibrillen nach Anspruch 1.

4. Härtbare Formmasse nach Anspruch 3, dadurch gekennzeichnet, daß sie 0,1 bis 100 Gew.% - bezogen auf wasserfreies Bindemittel - feinteilige Kieselsäure mit einer
spezifischen Oberfläche nach BET von größer als
$5 \text{ m}^2 \cdot \text{g}^{-1}$ enthält.

5. Verfahren zur Herstellung von Bauelementen, dadurch gekennzeichnet, daß man eine Mischung herstellt aus
einem hydraulischen Bindemittel, 0,1 bis 50 Gew.% Fibrillen nach Anspruch 1, sowie mindestens 50 Gew.%
Wasser, jeweils bezogen auf Bindemittel, soviel Wasser
mechanisch abtrennt, daß die Mischung sich verfestigt,
die erhaltene Masse formt und aushärtet.

Zeichn.

0098542

FIG. 1

FIG. 2
A-B